# EUROPEAN PATENT APPLICATION

(11) **EP 1 477 829 A1**
(43) Date of publication of application: **17.11.2004**
(21) Application number: 03705022.6
(22) Date of filing: 23.01.2003
(51) Int. Cl.: G02B 6/00, G02B 6/16, G02B 6/20

(54) **POLARIZATION RETAINING PHOTONIC CRYSTAL FIBER**

(30) Priority: 29.01.2002 JP 2002019525
(71) Applicant: Mitsubishi Cable Industries, Ltd., Amagasaki-shi Hyogo 660-0856 (JP); Nippon Telegraph and Telephone Corporation, Tokyo 100-8116 (JP)
(72) Inventor: TANAKA, Masatoshi, MITSUBISHI CABLE INDUSTRIES LTD, Itami-shi, Hyogo 664-0027 (JP); YAMADORI, Shinya, MITSUBISHI CABLE INDUSTRIES LTD, Itami-shi, Hyogo 664-0027 (JP); FUJITA, Moriyuki, MITSUBISHI CABLE INDUSTRIES LTD, Itami-shi, Hyogo 664-0027 (JP); KAWANISHI, Satoki,, Chiyoda-ku, Tokyo 100-8116 (JP); SUZUKI, Kazunori,, Chiyoda-ku, Tokyo 100-8116 (JP); KUBOTA, Hirokazu,, Chiyoda-ku, Tokyo 100-8116 (JP)
(74) Representative: Zinnecker, Armin, Dipl.-Ing.
(86) International application number: PCT/JP2003/000617
(87) International publication number: WO 2003/065089

(57) **Abstract**

A polarization-maintaining photonic crystal fiber **10** includes six thin holes **4a** and **4b** adjacent to a core **1**. Among these holes **4a** and **4b**, a pair of holes **4b** at opposite sides of the core **1** have a diameter greater than that of the other four thin holes **4a**, and therefore, the polarization-maintaining photonic crystal fiber **10** has polarization-maintaining ability. An overclad layer **3** exists around the clad layer **2** which includes a large number of thin holes **4a** and **4b** around the core **1**. The overclad layer **3** includes a pair of marking portions **5** at opposite sides of the core **1**. The marking portions **5** are holes which can be seen at positions different from the clad layer **2** when the fiber **10** is viewed from a position right above the fiber **10** in the drawing. In this way, the direction of the polarization plane of the polarization-maintaining photonic crystal fiber **10** is identified.

## Description

### Technical Field

The present invention relates to a polarization-maintaining photonic crystal fiber.

### Background Art

In recent years, photonic crystal fibers have been receiving attention as a fiber which achieves such a large chromatic dispersion that cannot be obtained in a commonly-employed optical fiber consisting of a core and a clad. The photonic crystal fibers consist of a core, a clad layer surrounding the core, which includes a large number of thin holes extending along the optical fiber axis and arranged in a crystalline formation, and an overclad layer surrounding the clad layer for supporting the clad layer.

On the other hand, polarization-maintaining fibers, which have high polarization stability, are used for an optical fiber sensor which utilizes polarization and coherence, a coherent optical fiber communication system, etc. The above photonic crystal fiber has been studied for use as a polarization-maintaining photonic crystal fiber in view of its superior chromatic dispersion characteristic. Such a conversion of a photonic crystal fiber to a polarization-maintaining fiber is realized by making some contrivance in the core or the arrangement of thin holes near the core, for example, by forming the core so as to have an oval or rectangular cross section or by forming some of the thin holes adjacent to the core so as to have different diameter from that of the other thin holes.

In a process of fusion-splicing two optical fibers at their ends, end faces of the optical fibers are butted such that the cores meet each other while taking a magnified view of the optical fibers from the side through a microscope, or the like, before the optical fibers are fused. In a process of splicing polarization-maintaining fibers, it is further necessary to match the polarization planes of the two fibers. In the case of a PANDA fiber which has been conventionally used as a polarization-maintaining fiber, stress-applying parts at the opposite sides of the core have a refractive index different from that of the other portion and are therefore identifiable by microscopic observation. Thus, the polarization planes of the two fibers are relatively readily matched.

However, in the case of a polarization-maintaining photonic crystal fiber, the polarization planes cannot be identified by microscopically observing the fiber from the side because a region around the core, in which the polarization plane would be seen, is hidden by a large number of thin holes surrounding the core region. Thus, it is very difficult to splice two polarization-maintaining photonic crystal fibers such that the polarization planes are matched.

The present invention was conceived in view of the above circumstances. An objective of the present invention is to provide a polarization-maintaining photonic crystal fiber in which the polarization plane is readily identified by magnified observation with a microscope, or the like.

### Disclosure of Invention

In order to achieve the above objective, a polarization-maintaining photonic crystal fiber includes in an overclad layer a marking portion for indicating a polarization plane.

Specifically, the invention of claim 1 is based on a polarization-maintaining photonic crystal fiber comprising: a core; a clad layer surrounding the core, the clad layer including a large number of thin holes extending along the axis of the fiber, the thin holes being arranged in a crystalline formation; and an overclad layer surrounding the clad layer.

In the above structure, the invention of claim 1 features a marking portion provided in the overclad layer which indicates a polarization plane to be maintained.

Herein, arranging a large number of thin holes in a crystalline formation means arranging a large number of thin holes in a regular pattern over a cross section of the fiber, for example, in a lattice formation in which the minimum unit is a triangle, a square or a rectangle. The thin hole preferably has a diameter of 0.1 to 10 µm in view of the fiber characteristics. The marking portion which indicates the polarization plane to be maintained means a portion which is distinguishable from the other part of the overclad layer by magnified observation with a microscope, or the like, and which has a specific positional relationship in advance with the polarization plane to be maintained. Once the position of the marking portion in the fiber is identified, the direction of the polarization in the polarization plane is also identified. The identification may be carried out with an eye or may be carried out with a measurement device.

According to the invention of claim 1, the polarization plane can be identified by magnified observation with a microscope, or the like. Therefore, it is possible to readily splice a polarization-maintaining photonic crystal fiber and other optical fiber such that the polarization planes are matched. The other optical fiber to be spliced is, for example, a polarization-maintaining photonic crystal fiber or any other type of polarization-maintaining fiber.

The marking portion may be made of a material which intercepts light at a wavelength different from the cutoff wavelength of the overclad layer around the marking portion or a material which emits light. The distance between the marking portion and the clad layer is preferably 2 µm or greater because, in such a case, the marking portion and the clad layer are readily distinguishable by magnified observation with a microscope, or the like.

In the invention of claim 2 which is based on the invention of claim 1, the marking portion is made of a material having a refractive index different from that of the material of the overclad layer.

According to the invention of claim 2, the polarization plane can be readily identified with a commonly-employed optical microscope, or the like. Furthermore, the structure of the fiber is simple and therefore is readily fabricated. Thus, the production cost is reduced. It is preferable in view of the cost, and the like, that the marking portion is provided at one position over a cross section of the fiber.

In the invention of claim 3 which is based on the invention of claim 1, the marking portion is a hole extending along the axis of the fiber.

According to the invention of claim 3, the polarization plane can be readily identified with a commonly-employed optical microscope, or the like. Furthermore, the structure of the fiber is simple and therefore is readily fabricated. Thus, the production cost is further reduced as compared with the invention of claim 2. The hole diameter of the marking portion is preferably 2 µm or greater because, in such a case, excellent viewability is obtained. If the hole diameter is greater than 20 µm, there is a possibility that the mechanical strength of the fiber deteriorates. Thus, the hole diameter is preferably 20 µm or smaller. The distance between the marking portion and the clad layer is preferably equal to or greater than the hole diameter of the marking portion because, in such a case, the marking portion and the clad layer are readily distinguishable by magnified observation with a microscope, or the like.

### Brief Description of Drawings

FIG. **1(A)** is a cross-sectional view of a polarization-maintaining photonic crystal fiber of embodiment 1. FIG. **1(B)** is a side view of the polarization-maintaining photonic crystal fiber of embodiment 1. FIG. **1(C)** is a top view of the polarization-maintaining photonic crystal fiber of embodiment 1.
FIG. **2** is a cross-sectional view of a polarization-maintaining photonic crystal fiber of embodiment 2.
FIG. **3** is a cross-sectional view of a polarization-maintaining photonic crystal fiber of embodiment 3.
FIG. **4** is a cross-sectional view of a polarization-maintaining photonic crystal fiber of embodiment 4.
FIG. **5** is a cross-sectional view of a polarization-maintaining photonic crystal fiber of embodiment 5.
FIG. **6** is a cross-sectional view of a polarization-maintaining photonic crystal fiber of embodiment 6.
FIG. **7** is a cross-sectional view of a polarization-maintaining photonic crystal fiber of embodiment 7.
FIG. **8** shows another structure which achieves the polarization-maintaining ability.
FIG. **9** shows still another structure which achieves the polarization-maintaining ability.
FIG. **10(A)** is a cross-sectional view of a conventional polarization-maintaining photonic crystal fiber. FIG. **10(B)** is a side view of the conventional polarization-maintaining photonic crystal fiber. FIG. **10(C)** is a top view of the conventional polarization-maintaining photonic crystal fiber.

### Best Mode for Carrying Out the Invention

Hereinafter, embodiments of the present invention are described with reference to the drawings.

### (Embodiment 1)

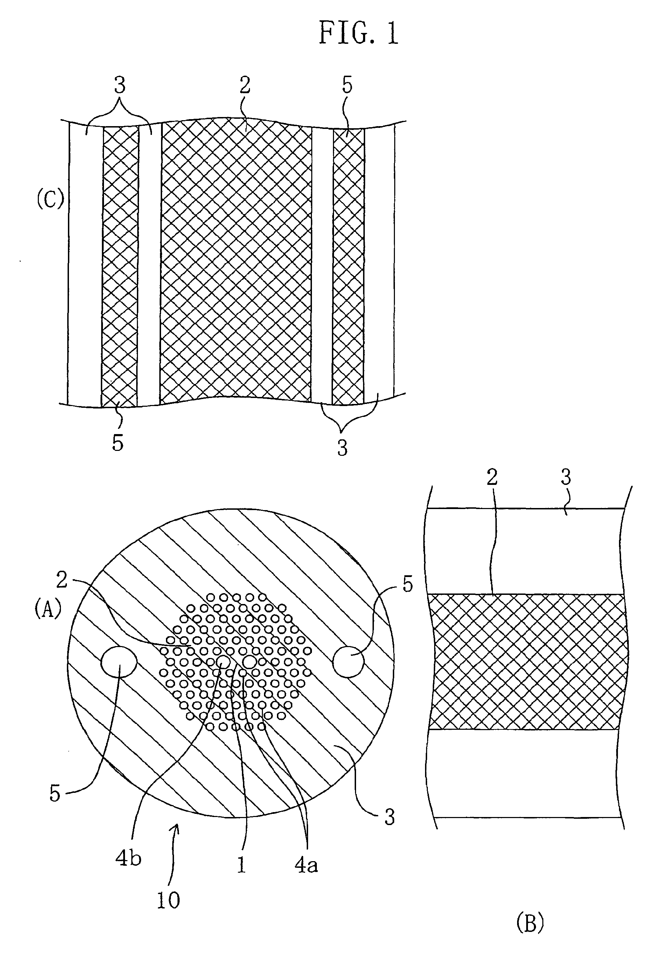

FIG. **1(A)** is a cross-sectional view of a polarization-maintaining photonic crystal fiber **10** of embodiment 1. The polarization-maintaining photonic crystal fiber **10** includes a core **1** made of silica glass, a clad layer **2** surrounding the core **1**, and an overclad layer **3** made of silica glass around the clad layer **2**. The clad layer **2** includes a large number of thin holes **4a** and **4b** extending along the fiber axis. The thin holes **4a** and **4b** are arranged in a crystalline formation in which the minimum unit is a right triangular lattice. The overclad layer **3** has a pair of marking portions **5** at symmetric positions with respect to the core **1**.

In the polarization-maintaining photonic crystal fiber **10**, there are six thin holes **4a** and **4b** adjacent to the core **1**. Among these holes, a pair of holes **4b** at opposite sides of the core **1** have a diameter greater than that of the other four thin holes **4a**. With such an arrangement of the thin holes **4a** and **4b**, the optical fiber **10** has polarization-maintaining ability. Between two polarization modes propagating in a polarization plane perpendicular to a cross section of the fiber which includes a line between the centers of the pair of larger diameter holes **4b** (hereinafter, referred to as "first polarization plane") and a polarization plane perpendicular to the first polarization plane (hereinafter, referred to as "second polarization plane"), a difference occurs in the propagation constant according to the arrangement of the thin holes **4a** and **4b** adjacent to the core **1**, and therefore, the polarization is maintained.

The pair of marking portions **5** are holes which extend along the axis of the optical fiber **10** and have a diameter greater than those of the thin holes **4a** and **4b** of the clad layer **2**. The centers of the holes of the marking portions **5** are on the first polarization plane. That is, the marking portions **5** are at positions which indicate the polarization plane.

Next, how to identify the direction of a polarization plane by microscopically observing the polarization-maintaining photonic crystal fiber **10** is described.

FIG. **1(B)** is a side view of the polarization-maintaining photonic crystal fiber **10** which is seen from the right-hand side of the cross-sectional view shown in FIG. **1(A).** The clad layer **2** including the thin holes **4a** and **4b** has a lower refractive index than that of the overclad layer **3** which is made of only silica glass and therefore looks black. In this view, the marking portions **5** are also holes and therefore must look black. However, the marking portions **5** are unidentifiable because they are at positions overlapping the clad layer **2**. On the other hand, when the polarization-maintaining photonic crystal fiber **10** is seen from a position right above the cross-sectional view shown in FIG. **1(A)** (see FIG. **1(C)),** the pair of marking portions **5** can be viewed in the overclad layer **3** separately from the clad layer **2**. Thus, a plane perpendicular to this observation direction is identified as the first polarization plane. In the process of splicing the two polarization-maintaining photonic crystal fibers **10**, the polarization planes are readily matched by magnified observation with a microscope, or the like.

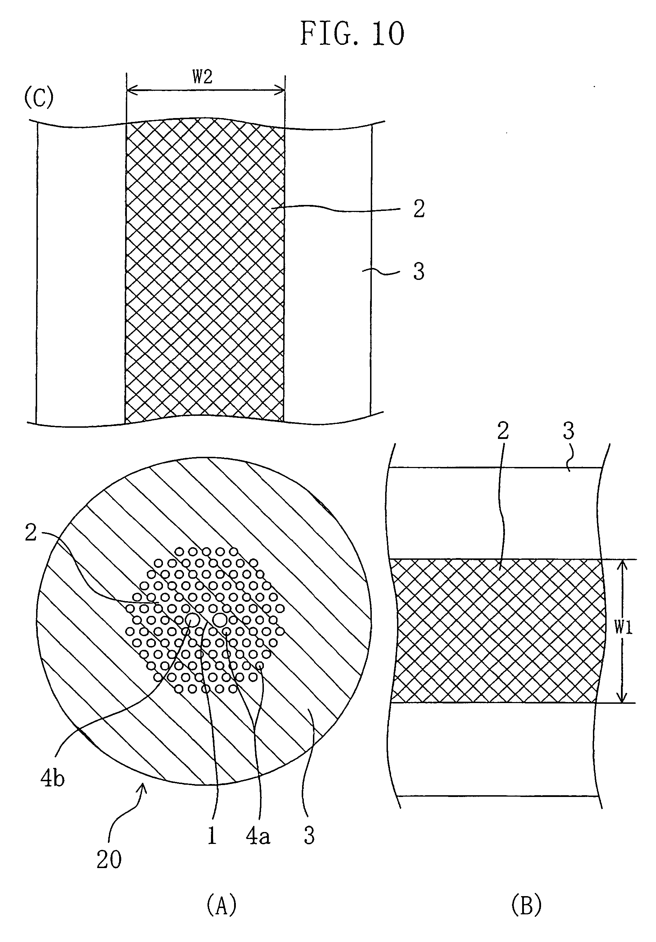

A conventional polarization-maintaining photonic crystal fiber **20**, which does not have the marking portions **5** of the polarization-maintaining photonic crystal fiber **10** of embodiment 1, looks almost the same no matter which side it is seen from (see FIGS. **10(B)** and **10(C))**. Thus, the polarization plane cannot be identified. Precisely speaking, the widths of the clad layer **2** slightly differ (W2>W1) but are not visually distinguishable.

Next, a method for producing the polarization-maintaining photonic crystal fiber **10** of embodiment 1 is described.

A supporting tube, which is a cylinder made of SiO₂, is first prepared. The supporting tube constitutes the overclad layer **3** in the final product. The supporting tube is thick such that the outside diameter is 2 to 5 times the inside diameter. Then, two holes, which function as the marking portions **5**, are formed in solid part of the supporting tube along its axis. These holes are formed at opposite positions with respect to the central axis of the supporting tube. Then, the inner wall of the supporting tube is ground so as to have a hexagonal cross section.

Then, one SiO₂ rod, two SiO₂ capillary tubes having the larger inside diameter, and a large number of SiO₂ capillary tubes having the smaller inside diameter, all of which have the same outside diameter, are prepared. The rod, which functions as a core, is placed at the center of the supporting tube. The capillary tubes having the larger inside diameter are placed at opposite sides of the rod on a line between the centers of the holes that are to be the marking portions **5**, and the remaining space in the supporting tube is stuffed with the capillary tubes having the smaller inside diameter, whereby a preform of a fiber is prepared. The arrangement of the rod and capillary tubes in the preform is the same as the arrangement shown in FIG. **1(A).**

The supporting tube and rod may be prepared using a known method, such as VAD, OVD, MCVD, or the like. The capillary tubes may be formed by a drawing process wherein a cylindrical material having a relatively large diameter (capillary material) is drawn while being heated so as to have a small diameter.

The thus-prepared preform is dehydrated with a chlorine gas, or the like, and is then subjected to a drawing process wherein after heated in a furnace the preform is drawn into an optical fiber having a smaller diameter (fiberization). Preferably, the ends of the preform are sealed before the drawing process such that the holes are prevented from being crushed during the drawing process.

After the preform is drawn into an optical fiber, the supporting tube, the capillary tubes and the rod are fused into an integral element, such that boundaries between the supporting tube and the capillary tubes, boundaries between the capillary tubes and the rod, and boundaries between the capillary tubes all disappear, because these are made of the same material. As a result, the polarization-maintaining photonic crystal fiber **10** shown in FIG. **1(A)** is obtained.

As described above, the polarization-maintaining photonic crystal fiber **10** of embodiment **1** has holes as the marking portions **5** in the overclad layer **3**. Thus, the direction of a polarization plane is readily identified by taking a magnified side view of the fiber **10** with a microscope. Accordingly, the task of splicing the polarization-maintaining photonic crystal fibers **10** or splicing the polarization-maintaining photonic crystal fiber **10** and another type of polarization-maintaining fiber, or the like, such that the polarization planes are matched is readily carried out within a short time period. Further, the splicing can be precisely performed even if an operator is less skilled. Thus, the cost of splicing is reduced. Furthermore, the marking portions **5** are formed only by boring two holes in the supporting tube which is to be the overclad layer **3**. Therefore, the marking portions **5** are readily formed within a short time period, and the production cost is reduced.

### (Embodiment 2)

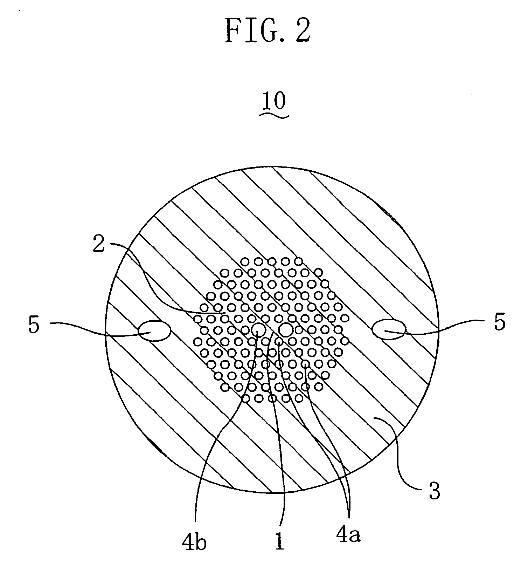

FIG. **2** is a cross-sectional view of a polarization-maintaining photonic crystal fiber **10** of embodiment 2. Embodiment 2 is different from embodiment 1 in that each of the marking portions **5** has an oval cross section. The direction of the major axis of the oval is generally equal to the direction in which a line between the centers of the two marking portions **5** extends. Herein, the major axis diameter of the oval of embodiment 2 is generally equal to the diameter of the circle of the marking portions **5** of embodiment 1. Thus, the viewability from the side of the fiber **10** is the same, but the inner surface area of the marking portion **5** per unit length of the fiber **10** is smaller in embodiment 2 than in embodiment 1. Thus, the number of rupture starting points which occur when the fiber is bent is smaller in embodiment 2 than in embodiment 1. That is, the fiber of embodiment 2 has a stronger mechanical strength than that of embodiment 1. The other functions and effects are equivalent to those of embodiment 1. The production method is also equivalent to that of embodiment 1.

### (Embodiment 3)

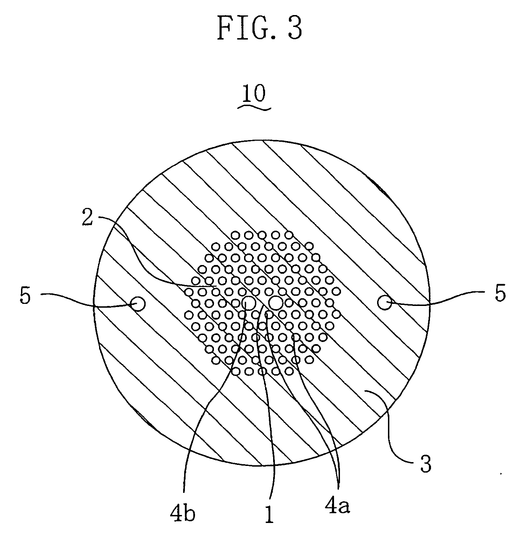

FIG. **3** is a cross-sectional view of a polarization-maintaining photonic crystal fiber **10** of embodiment 3. Embodiment 3 is different from embodiment 1 in that the marking portions **5** are holes having a smaller diameter than that of embodiment 1. The viewability from the side of the fiber **10** of embodiment 3 is inferior to that of embodiment 1. However, the inner surface area of the marking portion **5** per unit length of the fiber **10** is smaller in embodiment 3 than in embodiment 1. Thus, the fiber of embodiment 3 has a stronger mechanical strength than that of embodiment 1. The other functions and effects are equivalent to those of embodiment 1. The production method is also equivalent to that of embodiment 1.

### (Embodiment 4)

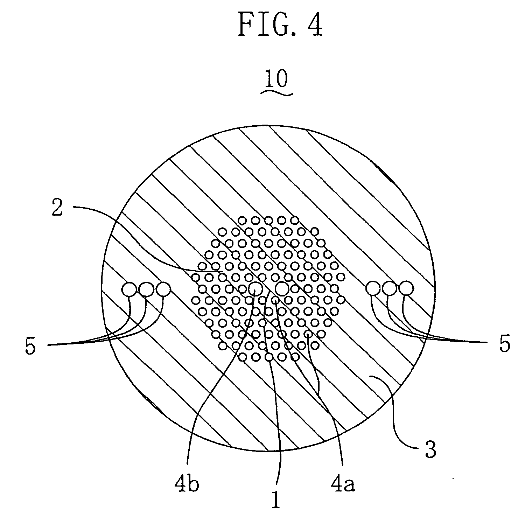

FIG. **4** is a cross-sectional view of a polarization-maintaining photonic crystal fiber **10** of embodiment 4. In embodiment 4, two sets of three small diameter holes are formed at opposite sides of the clad layer **2** such that the three holes of each set are aligned along a diameter of the fiber **10**. The sum of the diameters of the three aligned holes is greater than the diameter of the marking portion **5** of embodiment 1. In embodiment 4, adjacent three holes are bored in the supporting tube. Therefore, formation of these holes requires more time and trouble, and there is a possibility that a crack is made in the glass. However, the viewability from the side of the fiber **10** is superior to that of embodiment 1. The inner surface area of the marking portion **5** per unit length of the fiber **10** is smaller in embodiment 4 than in embodiment 1. Thus, the fiber of embodiment 4 has a stronger mechanical strength than that of embodiment 1. The other functions and effects are equivalent to those of embodiment 1. The production method is also equivalent to that of embodiment 1.

### (Embodiment 5)

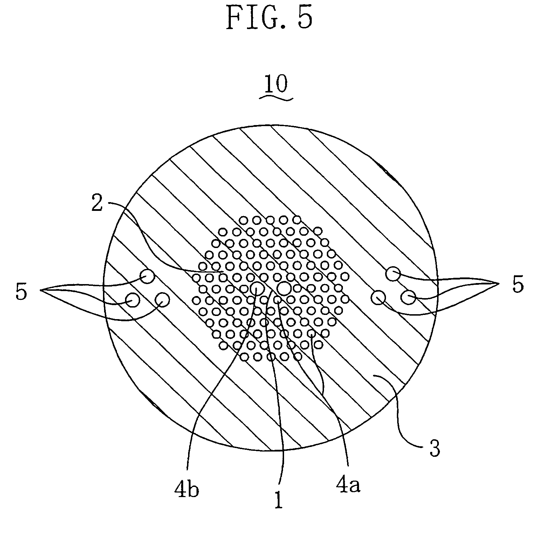

FIG. **5** is a cross-sectional view of a polarization-maintaining photonic crystal fiber **10** of embodiment 5. In embodiment 5, two sets of three small diameter holes are formed at opposite sides of the clad layer **2**. The three holes of each set are arranged in a generally right triangular formation such that each hole is separated from the other two by a distance greater than its diameter. The length of one side of this triangle is greater than the diameter of the marking portion **5** of embodiment 1. In embodiment 5, three holes are bored in the supporting tube, and therefore, formation of these holes requires more time and trouble. However, the viewability from the side of the fiber **10** is superior to that of embodiment 1. The inner surface area of the marking portion **5** per unit length of the fiber **10** is smaller in embodiment **5** than in embodiment 1. Thus, the fiber of embodiment 5 has a stronger mechanical strength than that of embodiment 1. The other functions and effects are equivalent to those of embodiment 1. The production method is also equivalent to that of embodiment 1.

### (Embodiment 6)

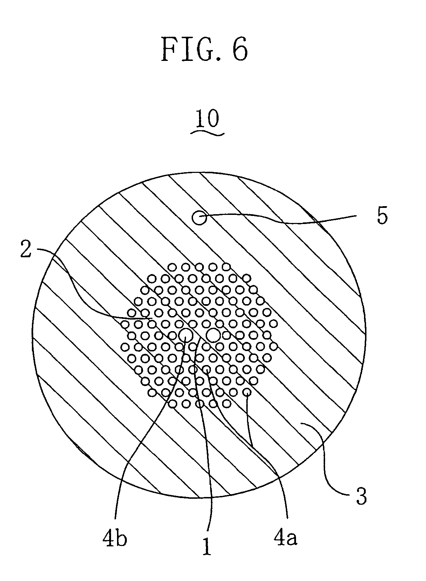

FIG. **6** is a cross-sectional view of a polarization-maintaining photonic crystal fiber **10** of embodiment 6. In embodiment 6, only one hole which has a smaller diameter than that of embodiment 1 is provided. In embodiment 6, the viewability from the side of the fiber **10** is inferior to that of embodiment 1. However, the marking portion **5** is bored with less time and trouble. The inner surface area of the marking portion **5** per unit length of the fiber **10** is smaller in embodiment 6 than in embodiment 1. Thus, the fiber of embodiment 6 has a stronger mechanical strength than that of embodiment 1. The other functions and effects are equivalent to those of embodiment 1. The production method is also equivalent to that of embodiment 1.

### (Embodiment 7)

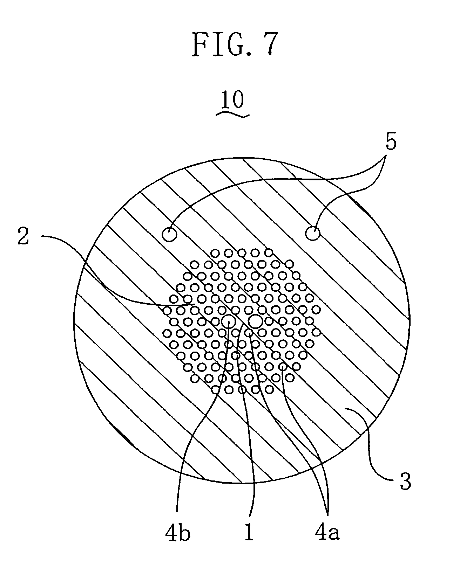

FIG. **7** is a cross-sectional view of a polarization-maintaining photonic crystal fiber **10** of embodiment 7. In embodiment 7, two holes each having a smaller diameter than that of embodiment 1 are formed as the marking portions **5** such that the holes are separated by a distance equal to the diameter of the clad layer **2**. When the fiber **10** of embodiment 7 is observed from the side upwardly or downwardly in FIG. **7**, the marking portions **5** are hidden by the clad layer **2** and therefore cannot be seen. However, the marking portions **5** can be seen by slightly turning the fiber **10** around the fiber axis. That is, in the polarization-maintaining photonic crystal fiber **10** of embodiment 7, the direction of the polarization plane can be accurately identified by magnified observation from the side with a microscope, or the like. Thus, the fibers **10** can be spliced with a very small displacement between the polarization planes. The inner surface area of the marking portion **5** per unit length of the fiber **10** is smaller in embodiment 7 than in embodiment 1. Thus, the fiber of embodiment 7 has a stronger mechanical strength than that of embodiment 1. The other functions and effects are equivalent to those of embodiment 1. The production method is also equivalent to that of embodiment 1.

### (Other embodiments)

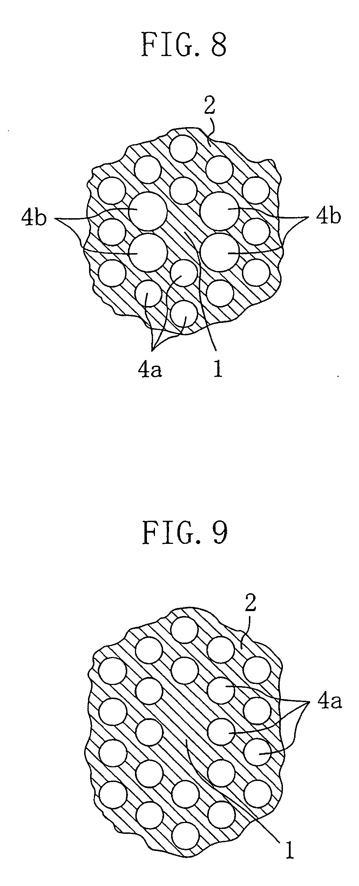

The above embodiments are merely examples to which the present invention is not limited. The structure for achieving the polarization-maintaining ability may be structures shown in FIGS. **8** and **9**. In FIG. **8**, there are six thin holes **4a** and **4b** adjacent to the core **1**. Among these holes, a pair of thin holes **4a** at opposite positions with respect to the core **1** have a smaller diameter than that of the other four thin holes **4b**. A large number of smaller diameter holes **4a** are provided in a crystalline formation around the six holes adjacent to the core **1**, whereby the clad layer **2** is formed. In FIG. **9**, the core **1** has different diameters along two orthogonal directions so that the polarization-maintaining ability is obtained. The ratio of the vertical diameter to the horizontal diameter of the core **1** is two to one. A large number of small diameter holes **4a** are provided in a crystalline formation, whereby the clad layer **2** is formed. However, the present invention is not limited to the above structures. Any structure may be employed so long as it achieves the polarization-maintaining ability.

The material of the fiber **10** may be glass other than silica, plastic, or the like. Alternatively, the material of the fiber **10** may be silica glass doped with Ge, B, F, or the like. The arrangement of the thin holes in the clad layer **2** may be a regular arrangement in which the minimum unit is a triangle, a rectangle, a honeycomb configuration, etc. The cross section of the thin holes **4a** and **4b** may be a circle, an oval, a polygon, a semicircle, or any other structure. The thin holes **4a** which constitute the clad layer **2** may all have the same diameter. Alternatively, some of the thin holes **4a** may have different diameters. Only the core **1** may be doped with Ge, B, F, or the like. A thin hole may be provided in the core **1**. Alternatively, the core **1** may be an air hole.

The marking portion **5** may not be a hole. For example, the marking portion **5** may be filled with a material having a different refractive index, glass doped with a material which emits light at a specific wavelength when irradiated, or the like. This specific wavelength does not need to be visually observed so long as it is detected by a measurement device. The shape, diameter and position of the marking portion **5** may be any shape, diameter and position so long as the marking portion 5 is visually identified by observation from the side of the fiber **10.** The marking portion **5** may be provided at any position in the overclad layer **3** so long as the polarization plane is indicated, i.e., so long as the relationship between the position of the marking portion **5** and the direction of the polarization plane is determined in advance.

The thin holes **4a** and **4b** of the clad layer **2** may be filled with a material other than silica glass, for example, a different type of glass, a polymer, silica glass doped with Ge, B, F, or the like. As for the production method of the fiber, all the thin holes **4a** and **4b** and the marking portions **5** may be bored with a drill, or the like. Conversely, all of them may be formed by capillary tubes.

The present invention is carried out according to the above-described embodiments and produces the effects described below.

Since a polarization-maintaining photonic crystal fiber has in an overclad layer a marking portion which indicates the polarization plane, the direction of the polarization plane is readily visually identified by magnified observation from the side of the fiber. Thus, in the process of splicing two fibers, the polarization planes are readily matched within a short time period. Accordingly, the cost of such a task decreases. In the case where the marking portion is formed by a hole, production of the fiber is easy, and therefore, the production cost thereof is low.

### Industrial Applicability

In a polarization-maintaining photonic crystal fiber of the present invention, the polarization plane is readily identified using a microscope, or the like. Thus, the polarization-maintaining photonic crystal fiber can be readily produced and therefore possesses high industrial applicability.

## Claims

1. A polarization-maintaining photonic crystal fiber, comprising:
a core;
a clad layer surrounding the core, the clad layer including a large number of thin holes extending along the axis of the fiber, the thin holes being arranged in a crystalline formation; and
an overclad layer surrounding the clad layer,
wherein the overclad layer has a marking portion for indicating a polarization plane to be maintained.

2. The polarization-maintaining photonic crystal fiber of claim 1, wherein the marking portion is made of a material having a refractive index different from that of the material of the overclad layer.

3. The polarization-maintaining photonic crystal fiber of claim 1, wherein the marking portion is a hole extending along the axis of the fiber.
